# EUROPÄISCHE PATENTSCHRIFT

(11) **EP 1 164 040 B1**
(45) Veröffentlichungstag und Bekanntmachung des Hinweises auf die Patenterteilung: **03.11.2004**
(21) Anmeldenummer: 01114179.3
(22) Anmeldetag: 12.06.2001
(51) Int. Cl.: B60J 7/12

(54) **Cabriolet-Fahrzeug**
Convertible vehicle
Véhicule convertible

(30) Priorität: 15.06.2000 DE 10029478; 15.06.2000 DE 10029471
(43) Veröffentlichungstag der Anmeldung: 19.12.2001
(73) Patentinhaber: Wilhelm Karmann GmbH, D-49084 Osnabrück (DE)
(72) Erfinder: Rothe, Karl, 49597 Rieste (DE); Schnieder, Werner, 49124 Georgsmarienhütte (DE); Heselhaus, Udo, 49479 Ibbenbüren (DE)
(74) Vertreter: Busse & Busse Patentanwälte

(56) Entgegenhaltungen:
- EP-A- 0 332 810
- DE-A- 4 309 607
- US-A- 5 788 316

## Beschreibung

Die Erfindung betrifft ein Cabriolet-Fahrzeug mit einem einen heckseitigen Verdeckspannbügel aufweisenden Faltverdeck gemäß dem Oberbegriff des Anspruchs 1.

Bei einem bekannten Cabriolet-Fahrzeug dieser Art (DE 41 28 115 C1) weist das Faltverdeck eine die Heckscheibe einfassende flexible Dachhaut auf, die auch im Bereich oberhalb des heckseitigen Verdeckspannbügels mit einem breiten Gewebestreifen zur Heckscheibe hin verläuft. Bedingt durch die damit verringerten Abmessungen der Heckscheibe ist für einen Fahrzeugbenutzer die Übersichtlichkeit, insbesondere bei einer Rückwärtsfahrt, nachteilig eingeschränkt.

Bei einem Faltverdeck gemäß DE 43 09 607 A1 ist eine verstellbare Heckscheibe vorgesehen, deren in Schließstellung von innen am Verdeckspannbügel anliegender unterer Randbereich eine außenliegende Dichtfuge bildet. Für die Bewegung der Bauteile in die Öffnungsstellung ist bei aufwendiger Steuerung nur ein geringer Bewegungsraum nutzbar.

Die Erfindung befaßt sich mit dem Problem, ein Cabriolet-Fahrzeug zu schaffen, dessen mit wenigen Bauteilen hinreichend dicht in die Dachhaut integrierte Heckscheibe eine verbesserte heckseitige Durchsicht ermöglicht, unter Vermeidung von Dachhautspannungen mit einfachen Steuerungsmitteln in die Öffnungs- bzw. Schließstellung verlagerbar ist und im Heckbereich des Fahrzeugs eine raumsparende Packstellung einnimmt.

Die Erfindung löst diese Aufgabe mit einer Heckscheibe für ein Cabriolet-Fahrzeug mit den kennzeichnenden Merkmalen des Anspruchs 1. Hinsichtlich wesentlicher weiterer Ausgestaltungen wird auf die Ansprüche 2 bis 20 verwiesen.

Das erfindungsgemäß ausgebildete Cabriolet-Fahrzeug ist mit einer einen dreiseitigen Rahmen aufweisenden Heckscheibe versehen, deren freier unterer Querseitenrand unmittelbar von oben auf dem Verdeckspannbügel auflegbar ist, so daß in diesem Bereich eine Vergrößerung der Heckscheibenfläche erreicht ist, damit die verbesserte Durchsichtsmöglichkeit im Heckbereich des Fahrzeugs die Fahrsicherheit erhöht und der aufliegende Randbereich der Scheibe bei geringer Verschmutzungsanfälligkeit die Dichtwirkung verbessert.

Die aus Rahmen und Heckscheibe bestehende Baugruppe ist dabei so in die Dachhaut integriert, daß durch eine randseitig am Rahmen eingreifende Steuerungsbaugruppe diese Baueinheit während der Öffnungs- bzw. Schließbewegung des Verdeckgestells optimal auf einer Bewegungskurve geführt wird und Überbelastungen der flexiblen Dachhaut im heckseitigen Bereich vermieden sind.

In einer ersten Bewegungsphase beim Öffnen des Cabriolet-Fahrzeuges wird die heckseitige Baugruppe in Fahrtrichtung hochgeschwenkt, wobei in dieser Bewegungsphase der untere Querseitenrand der Heckscheibe aus seinem Verbindungseingriff auf dem Verdeckspannbügel gelöst wird, dieser mit der Heckscheiben-Baugruppe in eine nach oben gerichtete Lage gelangt und eine über die Steuerungsbaugruppe vermittelte Abstandsstellung zwischen Heckscheibe und Verdeckspannbügel gebildet ist. Nunmehr kann ein Verdeckkastendeckel geöffnet und die Öffnungsbewegung des Verdeckgestells fortgesetzt werden. Die Heckscheibenbaugruppe mit dem Verdeckspannbügel wird dabei entgegen der Fahrtrichtung nach unten verlagert, gleichzeitig der untere Querseitenrand der Heckscheibe aus seiner Abstandslage in den Nahbereich des Verdeckspannbügels zurückbewegt und damit eine Bahnkurve durchlaufen, auf der das Verdeck behinderungsfrei auch im Bereich der heckseitigen Verdeckwanne in einen engen Karosseriebereich nach unten abgelegt werden kann.

Die Steuerungsbaugruppe weist zur Steuerung der vorbeschriebenen Heckscheibenbewegung eine Schwenkstrebe und eine Schubführungseinheit auf, mit der die Relativbewegung zwischen Verdeckspannbügel und Heckscheibe so möglich ist, daß diese zwangsgeführt eine optimale Bewegungskurve durchläuft und eine Anpassung an die Platzverhältnisse im Heckbereich unterschiedlicher Fahrzeuge möglich ist.

In der letzten Phase der Ablegebewegung beim Öffnen des Verdecks wird die Heckscheibe mittels der Steuerungsbaugruppe relativ zum Verdeckspannbügel so verlagert, daß der untere Querseitenrand über den abgelegten Verdeckspannbügel nach außen vorsteht und damit für die vergrößerte Heckscheibe sowie die Steuerungsbaugruppe eine raumsparende Packstellung im Verdeckkasten erreicht ist.

Hinsichtlich wesentlicher weiterer Einzelheiten und vorteilhafter Ausgestaltungen der Erfindung wird auf die nachfolgende Beschreibung und die Zeichnung verwiesen, in der ein Ausführungsbeispiel des Cabriolet-Fahrzeugs mit der erfindungsgemäßen Heckscheibenanbindung näher erläutert ist. In der Zeichnung zeigen:
- Fig. 1: eine perspektivische Heckansicht eines Cabriolet-Fahrzeuges mit einem eine Heckscheibe aufweisenden Faltverdeck in Schließstellung,
- Fig. 2: eine Seitenansicht des erfindungsgemäßen Verdeckgestells in Schließstellung gemäß Fig. 1,
- Fig. 3 bis Fig. 5: jeweilige Darstellungen unterschiedlicher Bewegungsphasen bei der Verlagerung des Verdeckgestells gemäß Fig. 2 in die Öffnungsstellung,
- Fig. 6: eine vergrößerte Einzelteildarstellung der in Schließstellung auf dem Verdeckspannbügel aufliegenden Heckscheibe,
- Fig. 7: eine Darstellung ähnlich Fig. 6 mit der Heckscheibe und dem Verdeckspannbügel in einer Abstandsstellung,
- Fig. 8: eine Einzeldarstellung ähnlich Fig. 6 mit den heckseitigen Bauteilen in der Öffnungsstellung des Faltverdecks gemäß Fig. 5,
- Fig. 9: eine vergrößerte Ausschnittsdarstellung des Faltverdecks ähnlich Fig. 1 mit der Steuerungsbaugruppe zwischen Verdeckspannbügel und Heckscheibe in einer zweiten Ausführung,
- Fig. 10: das Verdeckgestell gemäß Fig. 9 in einer Öffnungsphase mit Bewegungskurve der Bauteile,
- Fig. 11: eine vergrößerte Ausschnittsdarstellung der am Verdeckspannbügel abgestützten Heckscheibe im Bereich einer an der Steuerungsbaugruppe vorgesehenen Schubführungseinheit,
- Fig. 12: eine Querschnittsdarstellung der Schubführungseinheit gemäß Fig. 11,
- Fig. 13: eine vergrößerte Einzeldarstellung der Bauteile der Schubführungseinheit gemäß Fig. 11,
- Fig. 14: eine Darstellung der Schubführungseinheit gemäß einer Linie XII-XII in Fig. 12,
- Fig. 15: eine vergrößerte Seitenansicht einer dritten Ausführung des Verdeckgestells in Schließstellung ähnlich Fig. 1,
- Fig. 16 bis Fig. 18: jeweilige Darstellungen unterschiedlicher Bewegungsphasen bei der Verlagerung des Verdeckgestells gemäß Fig. 15 in die Öffnungsstellung,
- Fig. 19: eine perspektivische Heckansicht des Verdeckgestells in einer vierten Ausführungsform ähnlich Fig. 15,
- Fig. 20: eine perspektivische Heckansicht des Verdeckgestells gemäß Fig. 19 in einer Bewegungsphase,
- Fig. 21: eine vergrößerte Schnittdarstellung der Heckscheibe gemäß einer Mittellängsebene in Fig. 1, und
- Fig. 22: eine Schnittdarstellung ähnlich Fig. 21 mit der Heckscheibe in einer Abstandsstellung zum Verdeckspannbügel.

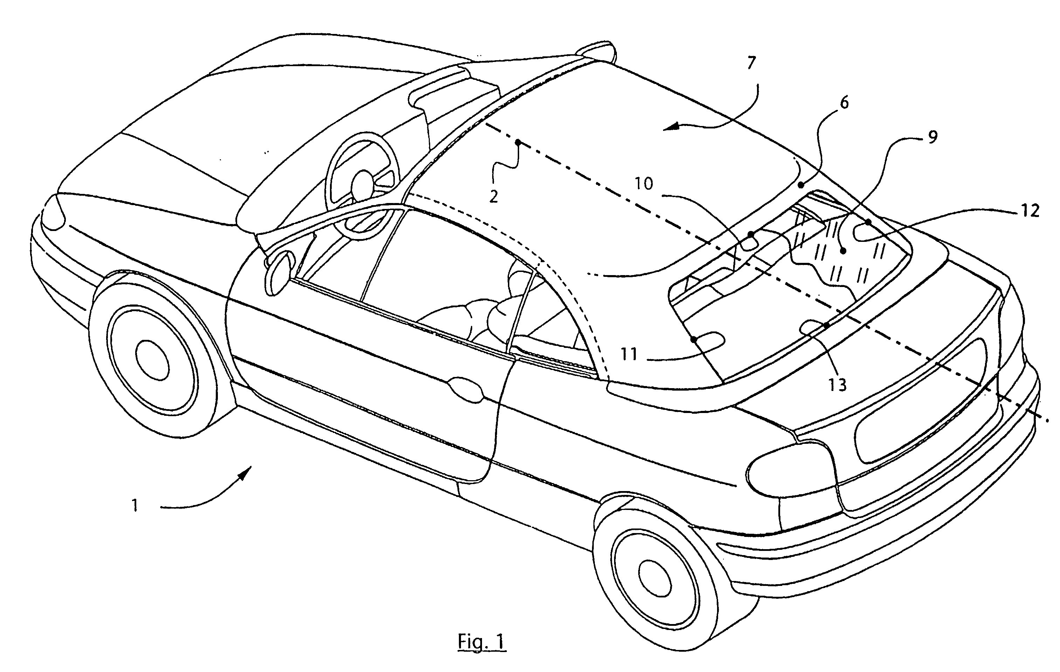

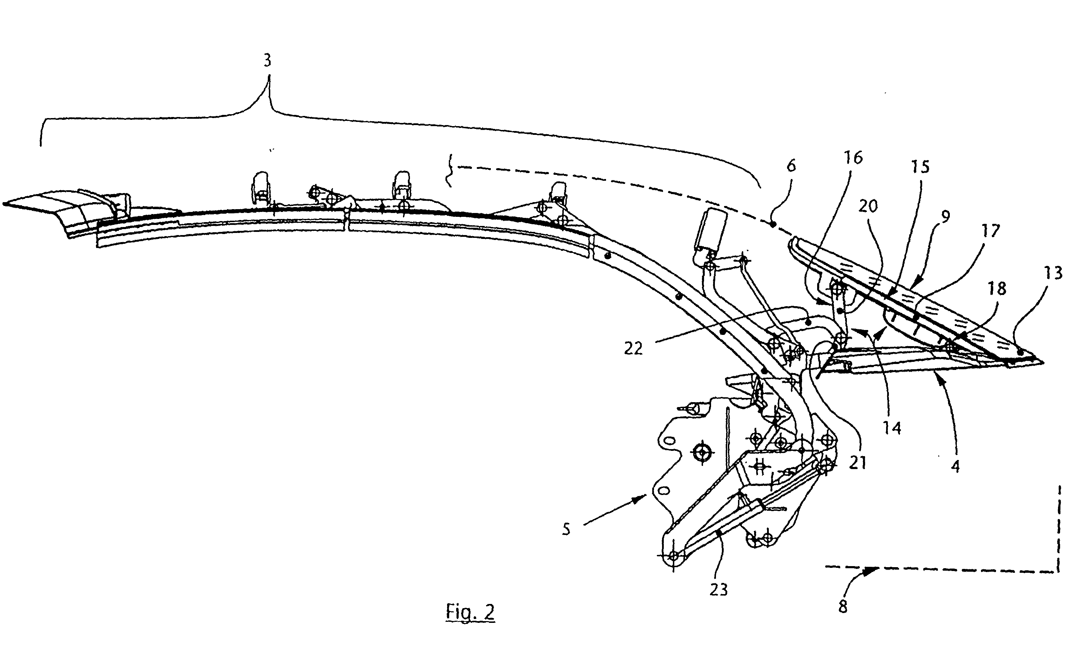

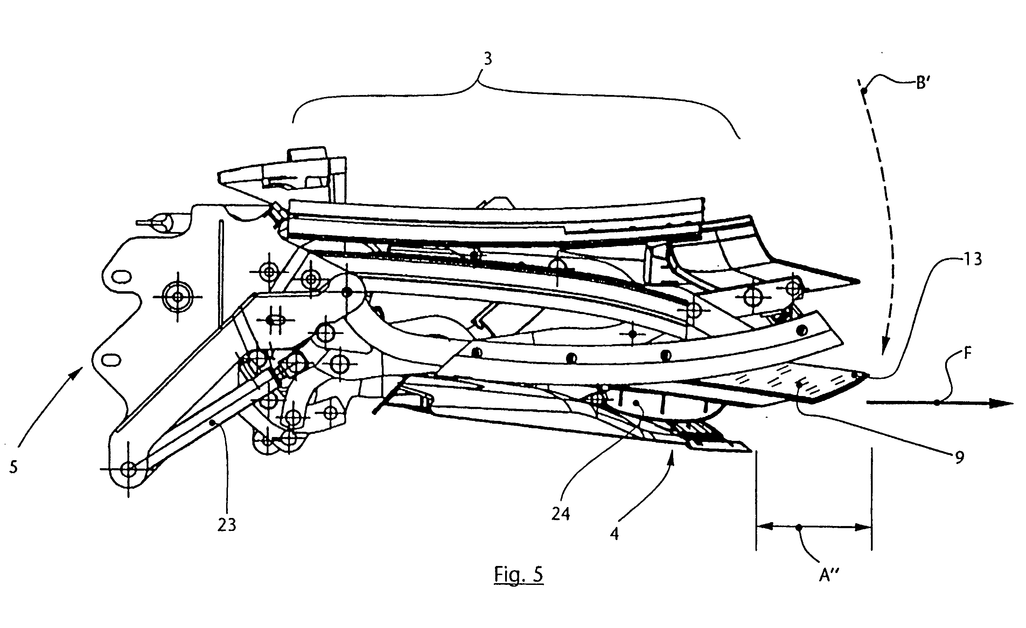

In Fig. 1 ist ein insgesamt mit 1 bezeichnetes Cabriolet-Fahrzeug dargestellt, dessen spiegelbildlich zur Fahrzeuglängsmittelebene 2 aufgebautes Verdeckgestell 3 (Fig. 2) einen heckseitigen Verdeckspannbügel 4 aufweist. Bei Verlagerung um ein allgemein mit 5 bezeichnetes, karosseriefestes Hauptlager ist das eine flexible Dachhaut 6 aufweisende Faltverdeck 7 in die gemäß Fig. 5 dargestellte Öffnungsstellung verlagerbar und aus dieser in die Schließstellung rückführbar. In der Öffnungsstellung kann das zurückgeklappte Faltverdeck 7 mitsamt dem Verdeckgestell 3 in einem nicht näher dargestellten Verdeckkasten 8 (Fig. 2) abgelegt werden. Das Faltverdeck 7 ist im Heckbereich seiner flexiblen Dachhaut 6 mit einer oberhalb des Verdeckspannbügels 4 verlaufenden, insbesondere als Festglasscheibe ausgebildeten Heckscheibe 9 mit im wesentlichen rechteckiger Umfangskontur versehen.

Bei dem erfindungsgemäß ausgebildeten Cabriolet-Fahrzeug 1 weist die im Bereich ihres unteren Querseitenrandes 13 unmittelbar auf dem Verdeckspannbügel abgestützte Heckscheibe 9 einen mit der Dachhaut 6 im Bereich des oberen Querseitenrandes 10 und der beiden Längsseitenränder 11, 12 (Fig. 1) verbundenen Rahmen 15 auf, an dem eine Steuerungsbaugruppe 14 angelenkt ist, mit der der Rahmen 15 und die Heckscheibe 9 gemeinsam verlagerbar sind (Fig. 2 bis Fig. 5).

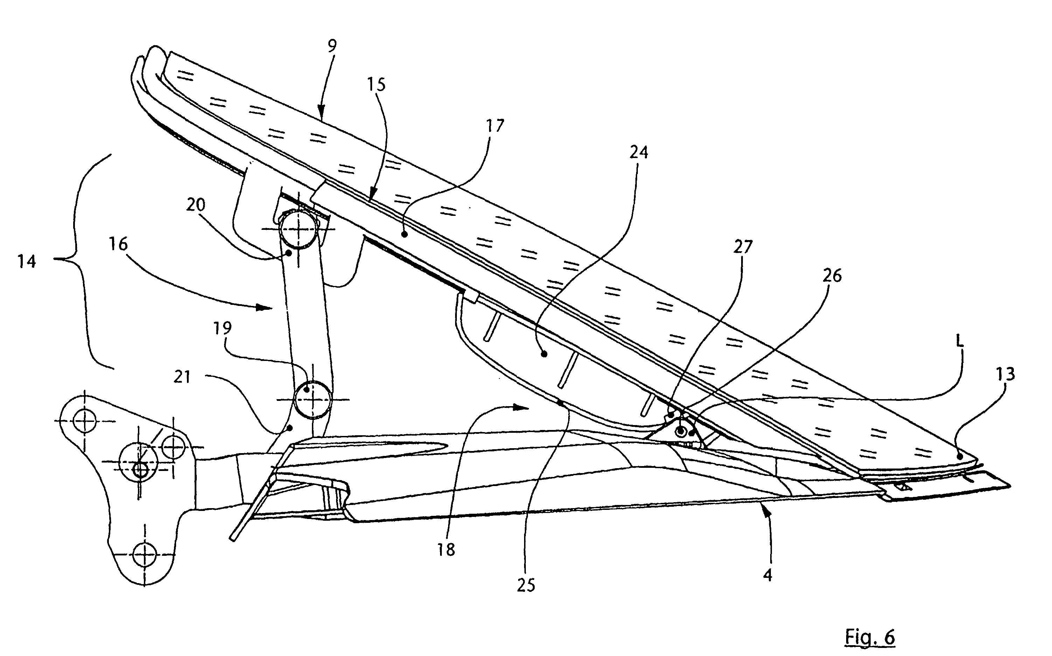

Die Zusammenschau von Fig. 2 mit den vergrößerten Einzeldarstellungen gemäß Fig. 6 bis 8 verdeutlicht die Stützverbindung der Heckscheibe 9 am Verdeckspannbügel 4 mit der Steuerungsbaugruppe 14. Diese weist in einer ersten Ausführung eine sich nahe dem Hauptlager 5 zwischen einem jeweiligen Seitenteil 17 des Rahmens 15 und dem Verdeckspannbügel 4 erstreckende Schwenkstrebe 16 auf, die mit einer andererseits den Rahmen 15 mit dem Verdeckspannbügel 4 verbindenden Schubführungseinheit 18 zusammenwirkt.

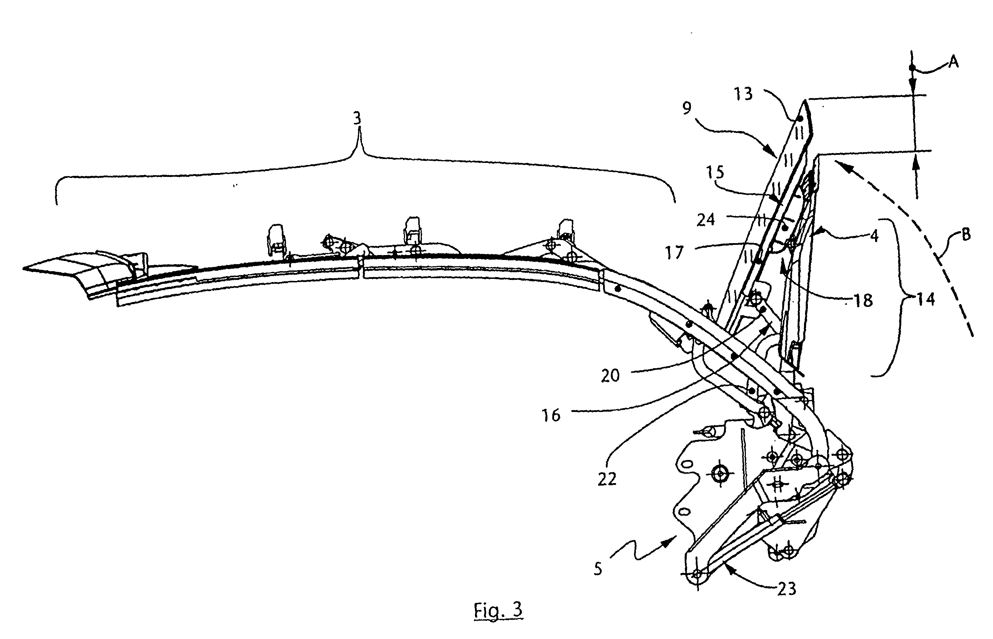

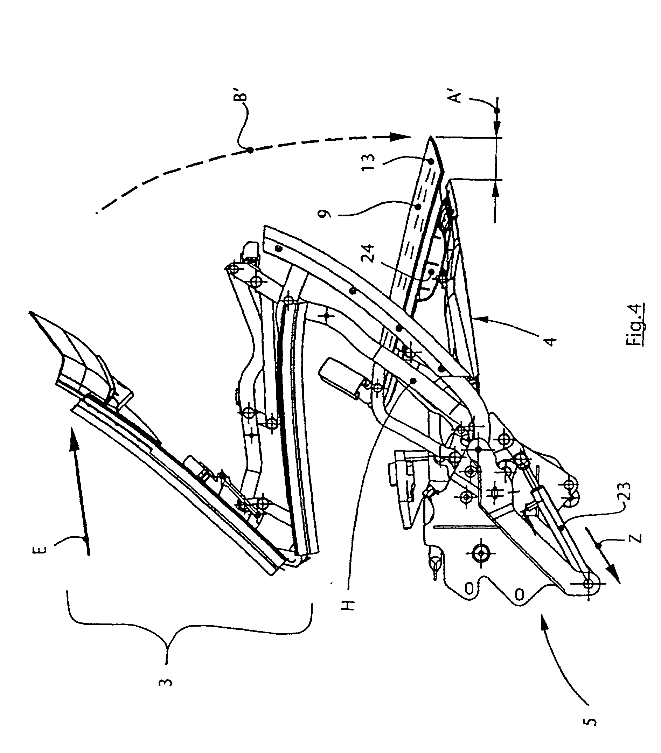

Die Schenkstrebe 16 ist mit zwei durch ein Gelenk 19 verbundenen Schenkeln 20 und 21 versehen, die im Bereich des Gelenkes 19 durch einen Verbindungshebel 22 (Fig. 2) mit dem Verdeckgestell 3 (Hauptführungsstange H, Fig. 4) bzw. dem Hauptlager 5 verbunden sind. Mit diesem Verbindungshebel 22 ist eine zusätzliche Abstützung der heckseitigen Bauteile erreicht. Die Ablegebewegung der Heckscheibe 9 (Fig. 3 bis Fig. 5) und die dabei erfolgende Verlagerung des Querseitenrandes 13 relativ zum Verdeckspannbügel 4 (Abstand A, Fig. 3) ist im wesentlichen durch die Verlagerung der Dachhaut 6 gesteuert, wobei mit dem Verbindungshebel 22 gleichzeitig eine Zwangssteuerung erreicht ist.

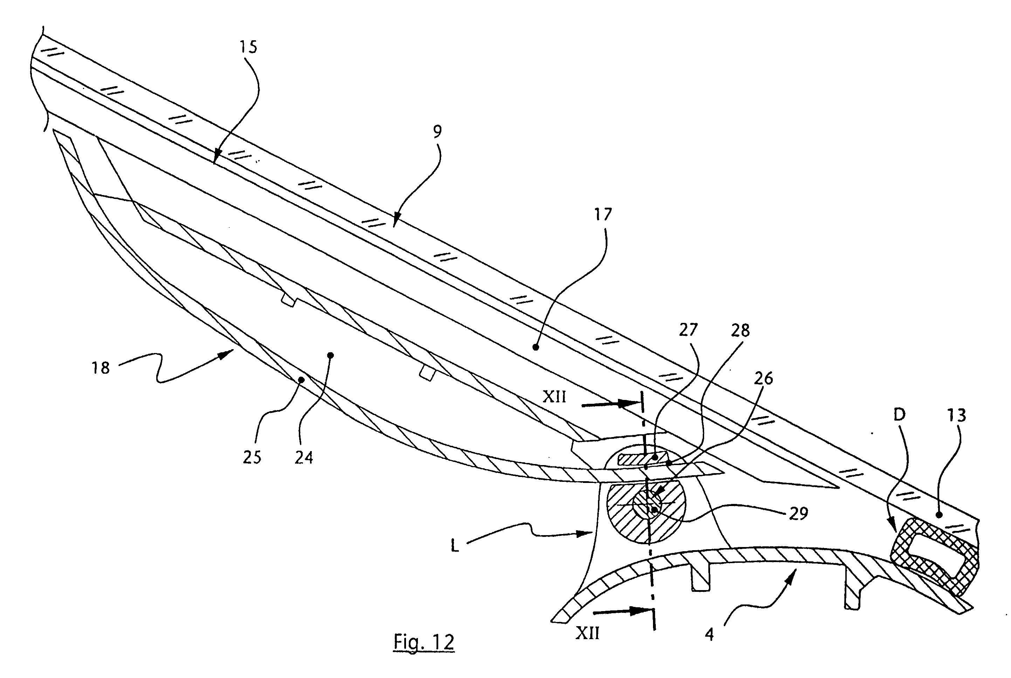

In einer ersten Bewegungsphase (Pfeil B, Fig. 3) wird die heckseitige Baueinheit in eine nahezu vertikale Zwischenstellung dadurch verlagert, daß ein am Hautlager 5 vorgesehenes Antriebsorgan (nicht dargestellt) und/oder ein Hydraulikzylinder 23 als Verdeckantrieb diese Schwenkbewegung einleitet. Die Heckscheibe 9 wird bei dieser Bewegung von einem auf dem Verdeckspannbügel 4 vorgesehenen Dichtungsteil D (Fig. 12) abgehoben und relativ zur Schließstellung um den Abstand A verschoben.

Bei der Fortsetzung des Öffnungsvorganges (Fig. 4, Fig. 5) wird mittels des Zylinders 23 (Pfeil Z) das gesamte Verdeckgestell 3 (Pfeil E) bewegt und nunmehr mit einer Absenkbewegung B' in Richtung des Verdeckkastens 8 verlagert, wobei die Heckscheibe 9 in Richtung zum Verdeckspannbügel 4 hin zurückverlagert wird (Abstand A'; Fig. 4) und danach eine Schubbewegung (Pfeil F) auf die Heckscheibe 9 derart eingeleitet, daß in der gemäß Fig. 5 dargestellten Ablagestellung die Heckscheibe 9 mit einem Abstand A' ' über den abgelegten Verdeckspannbügel 4 nach hinten vorsteht.

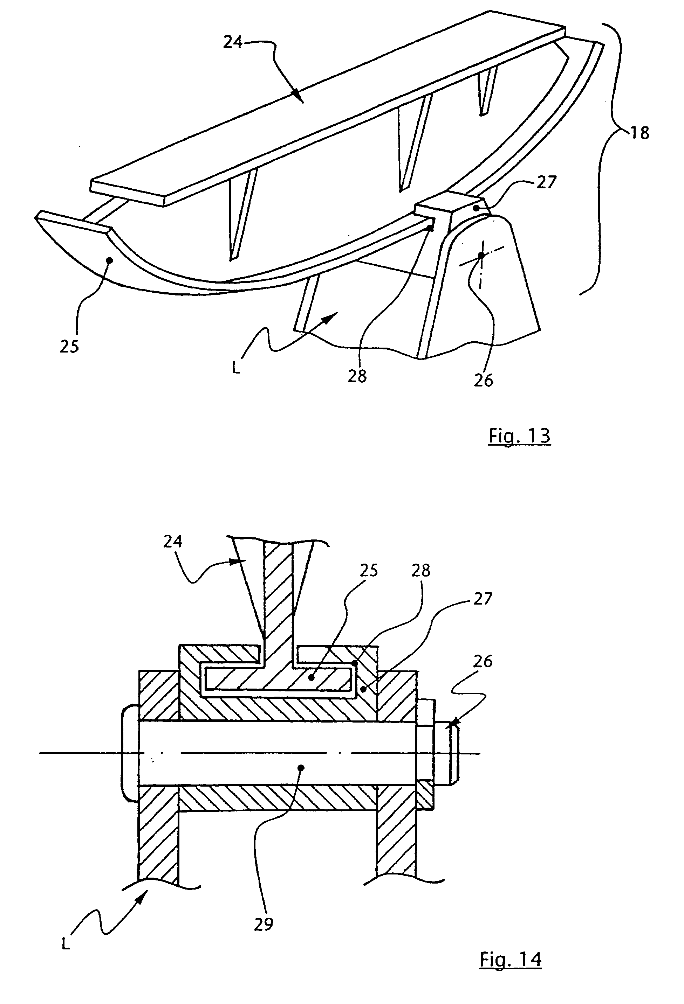

In Fig. 6 bis 8 ist die Schubführungseinheit 18 in einer vergrößerten Ausschnittsdarstellung sichtbar, wobei diese einen am Rahmen 15 im Bereich des Seitenteils 17 festgelegten Lenkprofilkörper 24 aufweist, an dessen bogenförmig gekrümmter Führungsschiene 25 eine schwenkbeweglich mit dem Verdeckspannbügel 4 verbundene Halteklaue 27 angreift. Die Halteklaue 27 ist an einem Lagerblock L durch ein Gelenk 26 abgestützt (Fig. 13), wobei die Bauteile der Schubführungseinheit 18 in vorteilhafter Ausführung im Bereich der gleitend aneinanderliegenden Teile 25 und 27 aus Kunststoff bestehen.

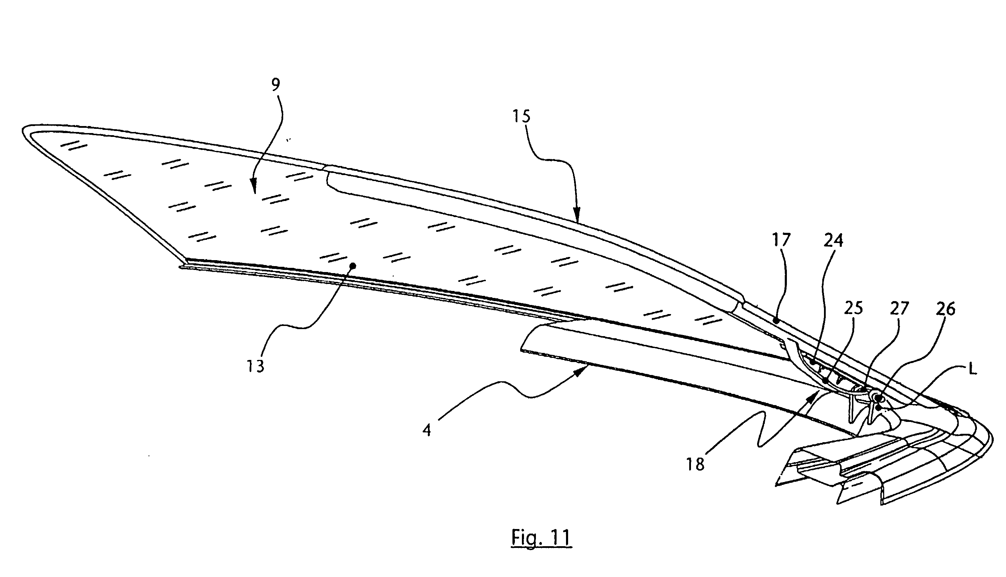

In Fig. 11 bis 14 ist die Anbindung des Lenkprofilkörpers 24 in jeweiligen Ausschnittsdarstellungen veranschaulicht, wobei deutlich wird, daß die Halteklaue 27 die ein T-Profil aufweisende Führungsschiene 25 mit einer hinterschnittenen Führungsnut 28 hintergreift und im Bereich des Gelenkes 26 eine Stützachse 29 die Halteklaue 27 schwenkbeweglich mit dem Lagerbock L verbindet.

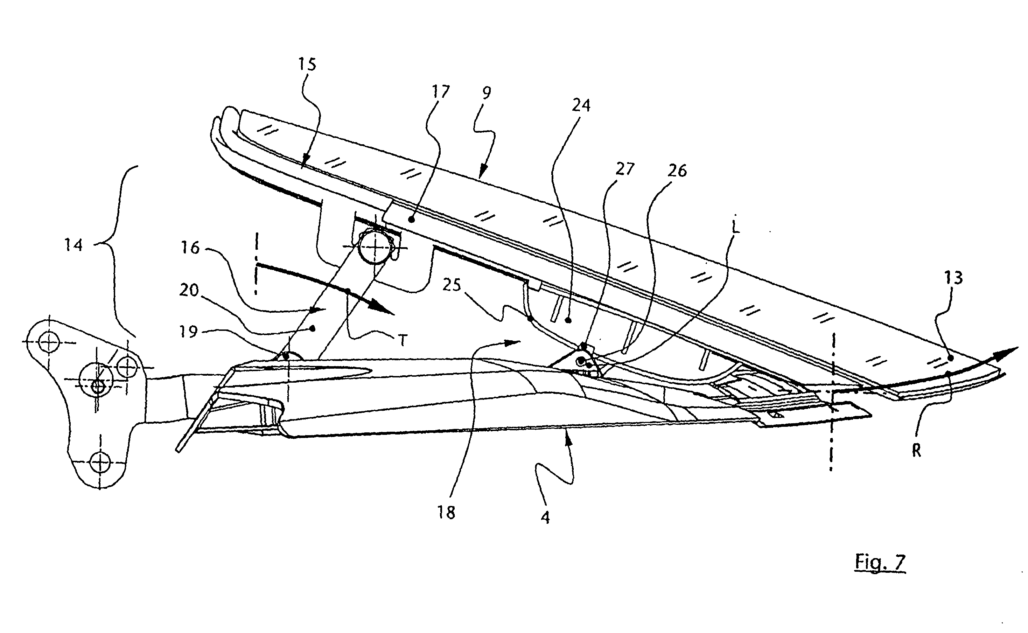

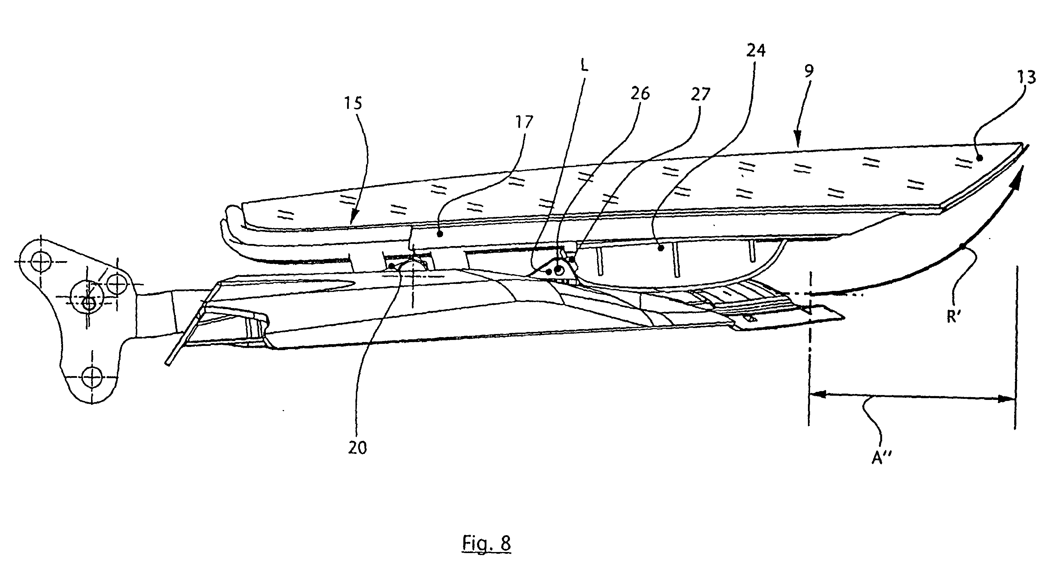

Mit dieser konstruktiv einfachen Verbindungskonstruktion ist die Gleitverbindung der Teile so hergestellt, daß die in Fig. 7 und 8 mit einem Schwenkpfeil R bzw. R' dargestellte Verlagerung der Heckscheibe 9 durch die Schubführungseinheit 18 während des Öffnungsvorgangs (Fig. 3 bis Fig. 5) bzw. Schließvorgangs (in entgegengesetztem Bewegungsablauf) beeinflußt werden kann. Die Schwenkbewegung im Bereich der Schwenkstrebe 16 erfolgt bei der Bewegung der Bauteile in einer Schwenkrichtung T (Fig. 7), so daß die in der komplementären Halteklaue 27 gleitende Führungsschiene 25 entsprechend synchron verlagert wird (Fig. 8) und die Heckscheibe 9 durch die Schwenk-Schub-Bewegung (Pfeil R') in die Ablagestellung gelangt.

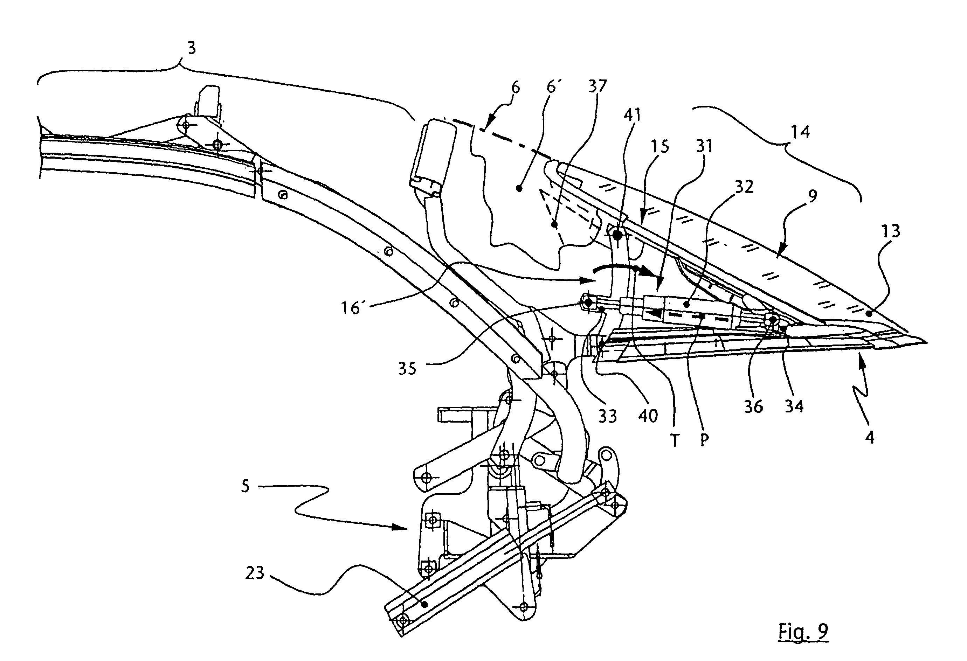

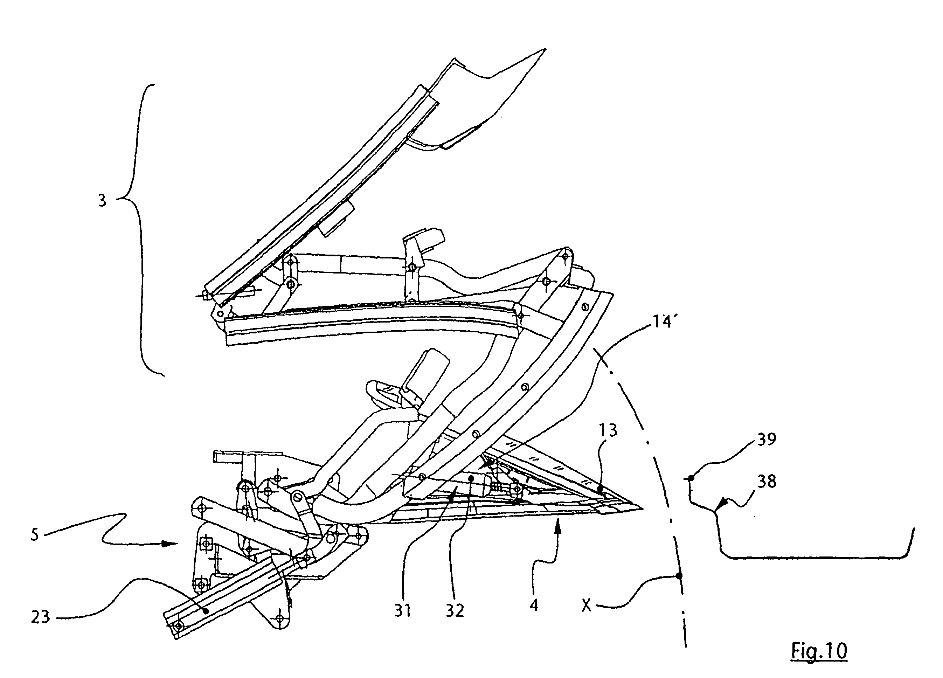

In Fig. 9 und 10 ist die Steuerungsbaugruppe 14' in einer zweiten Ausführungsform dargestellt, wobei diese eine sich zwischen der vorderen Schwenkstrebe 16' und der hinteren Schubführungseinheit 18 erstreckende Spannbaugruppe 31 aufweist. Diese Spannbaugruppe 31 ist in Form einer einstellbaren Druckfeder 32 ausgebildet, die zwischen einem Ansatzschenkel 33 an der Schwenkstrebe 16' und einem Stützteil 34 am Verdeckspannbügel 4 im Bereich jeweiliger Lager 35 und 36 gehalten ist.

Diese Steuerungsbaugruppe 14' ist mit der Spannbaugruppe 31 so auf die Bewegung der Teile im Heckbereich des Fahrzeuges einstellbar, daß bei der Öffnungs- bzw. Schließbewegung (Fig. 10) eine optimale Faltung der Dachhaut 6 erfolgt. Wie bereits anhand der Ausführung der Baugruppe 14 beschrieben, wird die jeweilige Schwenkstellung der Heckscheibe 9 im Nahbereich der Schwenkstrebe 16 (Fig. 3) bzw. 16' (Fig. 9) und der mit dieser zusammenwirkenden Schubführungseinheit 18 unmittelbar durch die Falt- oder Spannbewegung der Dachhaut 6 geführt. Bei dieser Falt- bzw. Spannbewegung werden im Bereich der vorbeschriebenen Bauteile, insbesondere durch die Schwenkbewegung T der Schwenkstrebe 16 bzw. 16' entsprechende Zugkräfte auf der Dachhaut 6 wirksam.

Um die daraus resultierenden Verdeckspannungen optimal auf die Randanbindung der Heckscheibe 9 im Bereich des Rahmens 15 zu übertragen, weist die Druckfeder 32 eine bei Verlagerung der Dachhaut der Schwenkbewegung T der Schwenkstreben 16 bzw. 16' entgegenwirkende Federkraft P auf. Damit ist eine straffe Voreinstellung der Dachhaut-Spannung erreicht und diese Voreinstellung führt dazu, daß beim Öffnungsvorgang (Fig. 10) erst bei Überschreiten der an der Druckfeder 32 eingestellten Federkraft P eine vorgesehene Bewegung und Faltung der Dachhaut 6 erfolgt. Damit sind Überbelastungen des Verdeckstoffes im heckseitigen Bereich 6' (Fig. 9) vermieden und bei geschlossenem Faltverdeck 7 wird auch der heckseitige Dachhaut-Bereich 6' so ausgesteift, daß dieser eine glatte und optisch ansprechende Kontur aufweist.

An Stelle der vorbeschriebenen Druckfeder 32 kann auch eine in den Lagern 40 und/oder 41 der Schwenkstrebe 16' angreifende Torsionsfeder (nicht dargestellt) vorgesehen sein, mit der die vorbeschriebene Spannkraft-Wirkung erzielt wird.

Für eine optimale Verbindung der Dachhaut 6 mit dem Rahmen 15 der Heckscheibe 9 ist in diesem Bereich zusätzlich eine zum Verdeckspannbügel 4 hin verlaufende und als Spannungsausgleichszone in der Dachhaut 6 vorgesehene Verdeckstofftasche 37 (Fig. 9) in das System integriert. In Fig. 10 ist mit einer Bahnkurve X die Verlagerung des Faltverdecks 7 ähnlich Fig. 4 dargestellt, wobei eine eine Karosseriekante 39 bildende Wasserablaufrinne 38 o. dgl. heckseitiges Bauteil die engen Platzverhältnisse verdeutlicht. Insbesondere bei diesen Einbau- und Schwenkbedingungen ist mit der Steuerungsbaugruppe 14, 14' im Bereich der Heckscheiben-Anbindung eine kollisionsfreie Verlagerung des Verdeckgestells 3 ermöglicht.

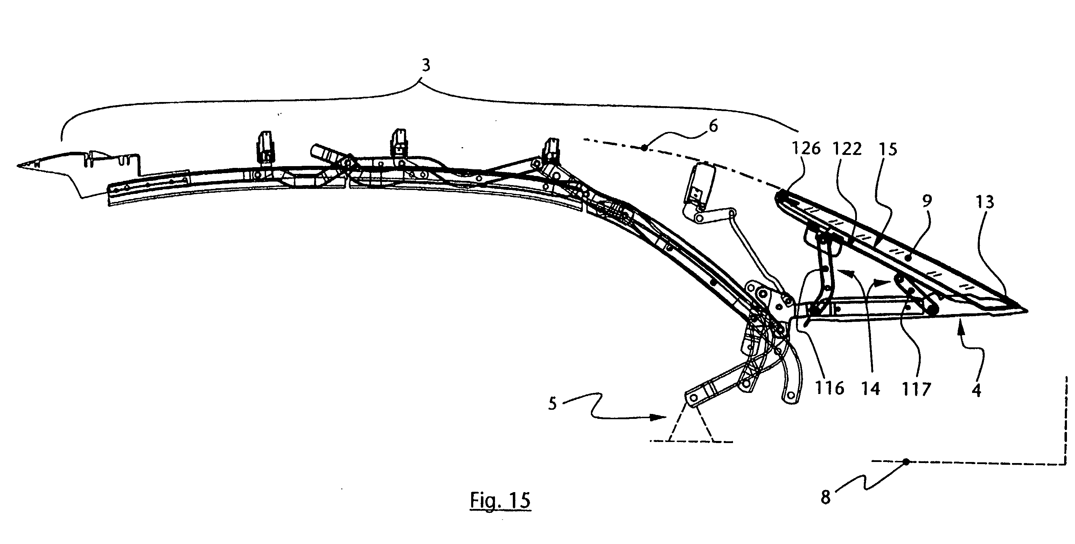

Die vergrößerten Ausschnittsdarstellungen gemäß Fig. 15 bis 19 verdeutlichen in einer dritten Ausführung die Wirkung der Steuerungsbaugruppe 14, wobei diese mit einer zwei Schwenkstreben 116 und 117 aufweisenden Parallelogrammlenker-Anordnung versehen ist. Diese beiden Schwenkstreben 116 und 117 greifen an der Heckscheibe 9 direkt an (nicht dargestellt) bzw. sind an jeweiligen Gelenkpunkten 118 und 119 an den Rahmen 15 der Heckscheibe 9 angelenkt. Im Bereich von Gelenkpunkten 120 und 121 weisen die Schwenkstreben 116 und 117 die Verbindung zum Verdeckspannbügel 4 auf.

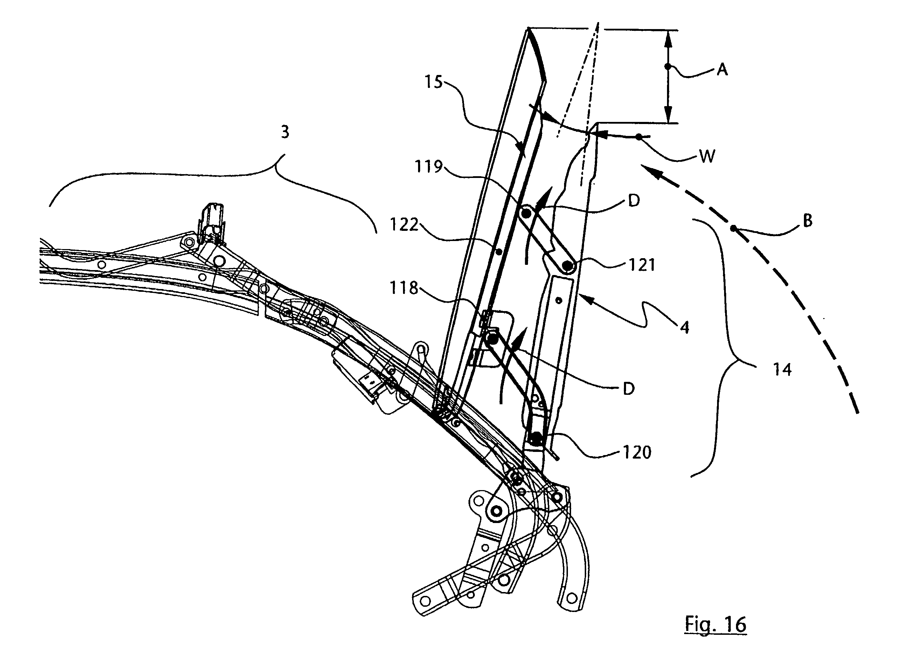

Der untere Querseitenrand 13 der Heckscheibe 9 ist in Schließstellung auf dem Verdeckspannbügel 4 in einem lösbaren Verbindungseingriff (Fig. 15) so festgelegt, daß bei Einleitung einer Öffnungsbewegung (Pfeil B; Fig. 16) die Heckscheibe 9 gemeinsam mit dem Verdeckspannbügel 4 hochgeschwenkt wird. Dabei ist die Heckscheibe 9 in eine einen Winkel W bildende Spreizstellung (Fig. 16) vom Verdeckspannbügel 4 abhebbar. In dieser Bewegungsphase B wird der untere Querseitenrand 13 der Heckscheibe 9 ausgehend von seiner Stützstellung auf dem Verdeckspannbügel 4 relativ zu diesem nach außen verlagert, so daß die beiden Teile den Abstand A aufweisen. Die beiden Schwenkstreben 116 und 117 führen eine entgegen der Öffnungsbewegung B gerichtete synchrone Schwenkbewegung D aus.

Bei dieser Öffnungsbewegung (Pfeil B) werden die zwei in Schließstellung im wesentlichen parallel nach vorn gerichteten Schwenkstreben 116 und 117 (Fig. 15) des eine Zwangssteuerung bildenden Parallelogrammlenkers in ihre jeweilige Schwenkstellung (Fig. 16, Fig. 17, Fig. 18) direkt durch die Falt- bzw. Spannbewegung der Dachhaut 6 geführt. In der dargestellten Ausführungsform ist deshalb kein Antriebselement für diese Steuerungsbaugruppe vorgesehen, jedoch ist denkbar, daß ein derartiges Antriebsorgan an einem der Bauteile angelenkt wird (nicht dargestellt), und damit eine aktive Unterstützung der Schwenkbewegung D im Bereich der Streben 116 und 117 erreicht ist.

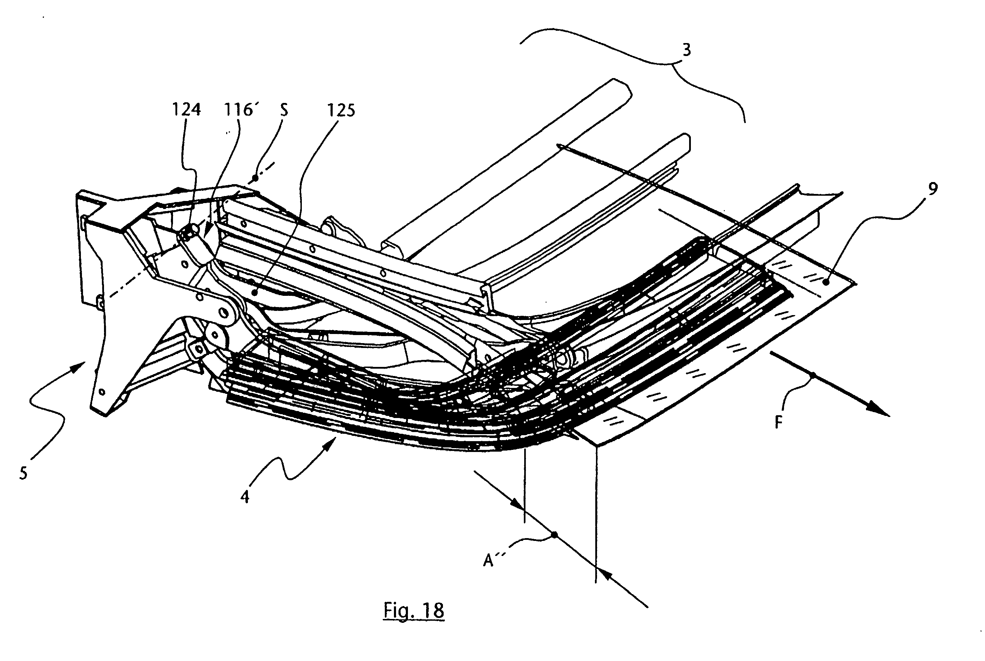

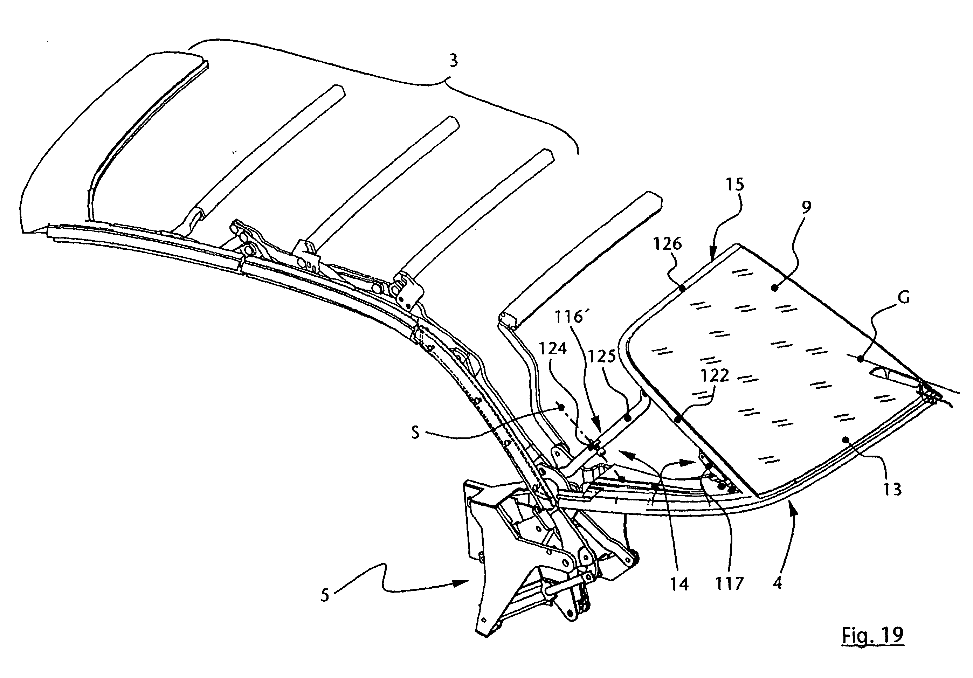

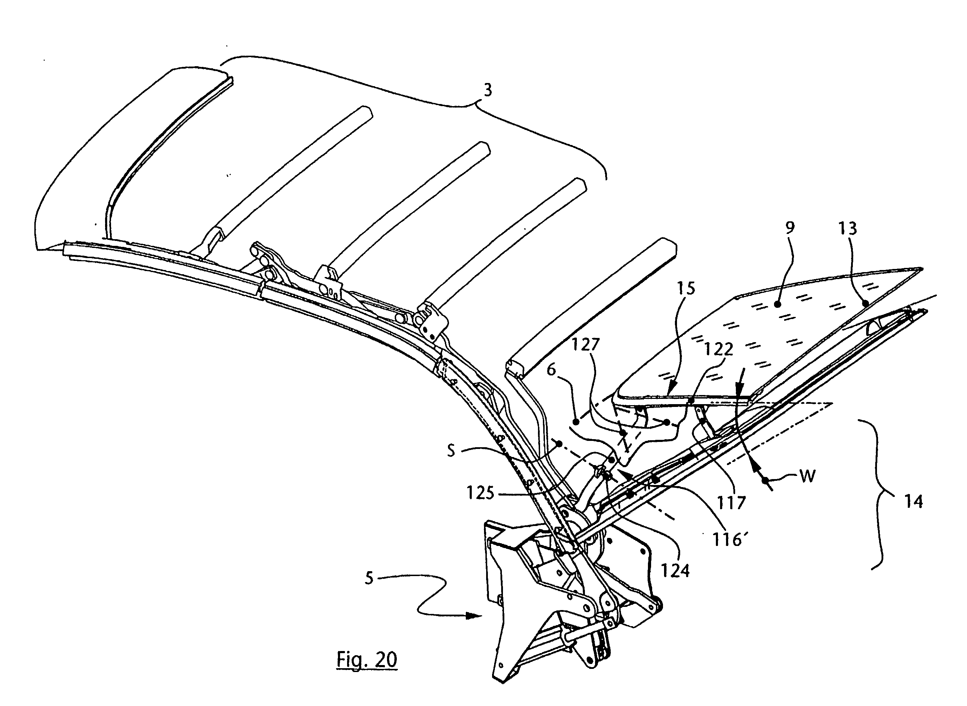

Die Schwenkstreben 116 und 117 sind an den jeweiligen Seitenschenkeln 122 bzw. 123 (nicht sichtbar) des Rahmens 15 angelenkt, wobei in der Ausführungsform gemäß Fig. 19 und Fig. 20 die Schwenkstrebe 116' mit einem zusätzlichen, eine Schenkachse S aufweisenden Gelenkteil 124 versehen ist, so daß der zur Heckscheibe 9 gerichtete Teil 125 der Schwenkstrebe 116' nach Schwenkung um die Achse S in Fahrzeugquerrichtung die in Packstellung verlagerten Teile des Verdeckgestells 3 untergreift (Fig. 18).

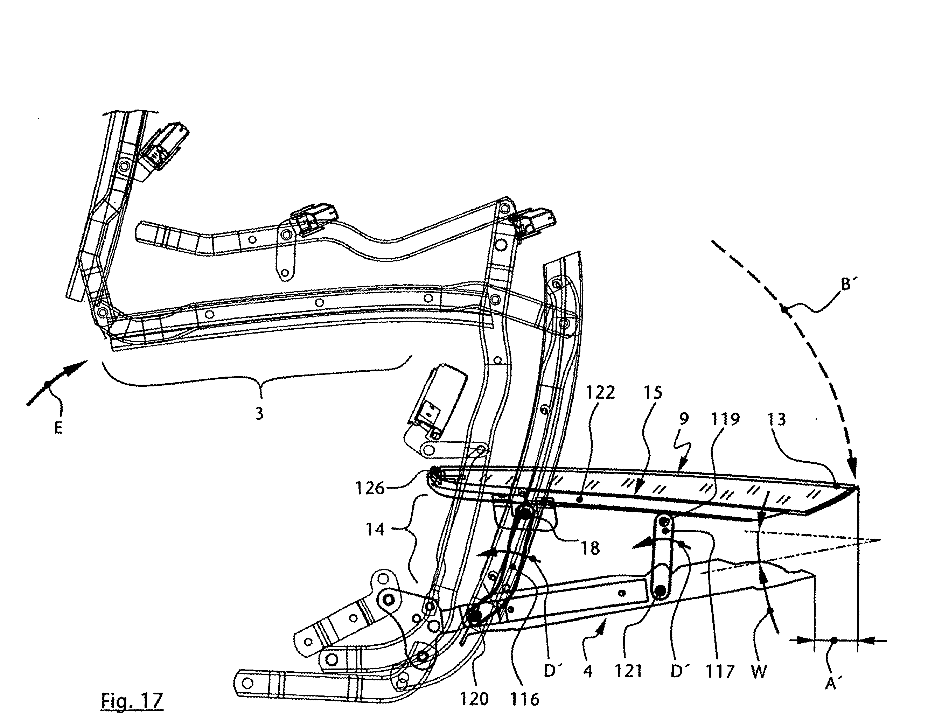

In Fig. 17 ist eine zweite Phase bei Verlagerung des Verdecks 3 in die Öffnungsstellung (Fig. 18) dargestellt, wobei der vordere Teil des Verdeckgestells über ein nicht dargestelltes Antriebsorgan in einer Öffnungsrichtung E nach hinten verlagert wird und gemeinsam mit der Baugruppe im Heckbereich des Fahrzeuges eine synchrone Abwärtsbewegung B' zum Verdeckkasten 8 hin ausführt. Die Schwenkstreben 116 und 117 führen dabei eine Schwenkbewegung D' aus, so daß die Heckscheibe 9 zum Verdeckspannbügel 4 hin zurückverlagert wird und dabei ein Abstand A' gebildet wird. Mit dieser gesteuerten Bewegung der Heckscheibe 9 ist die Bewegungsbahn der Bauteile so optimiert, daß eine Bewegung auf engem Raum möglich ist und das Verdeck 7 insgesamt auch an vorstehenden Karosserieteilen vorbeibewegt werden kann. In der Ablagestellung (Fig. 18) weisen die Bauteile eine vorteilhaft enge Packstellung auf und durch eine in dieser Lage in einer Pfeilrichtung F erfolgende Verlagerung der Heckscheibe 9 steht diese um einen Abstand A ' ' über den abgelegten Verdeckspannbügel 4 vor.

In Fig. 20 ist in einer Ausschnittsdarstellung der als Anbindung des Faltverdecks 7 vorgesehene Rahmen 15 mit seiner Verbindung zur Dachhaut 6 dargestellt, wobei die Dachhaut 6 die Seitenschenkel 122 und 123 des Rahmens 15 sowie einen oberen Querschenkel 126 übergreift. Im Verbindungsbereich zwischen Seitenschenkel 122 und Verdeckspannbügel 4 ist die Dachhaut 6 mit einer durch zwei Strichlinien schematisch dargestellten Stofftasche 127 versehen, so daß in diesem Bereich der Dachhaut 6 eine entsprechende Stoffreserve vorhanden und eine spannungsfreie Verlagerung der Heckscheibe 9 sowie deren optimale Bewegung durch die vorbeschriebenen Konstruktionsteile möglich ist.

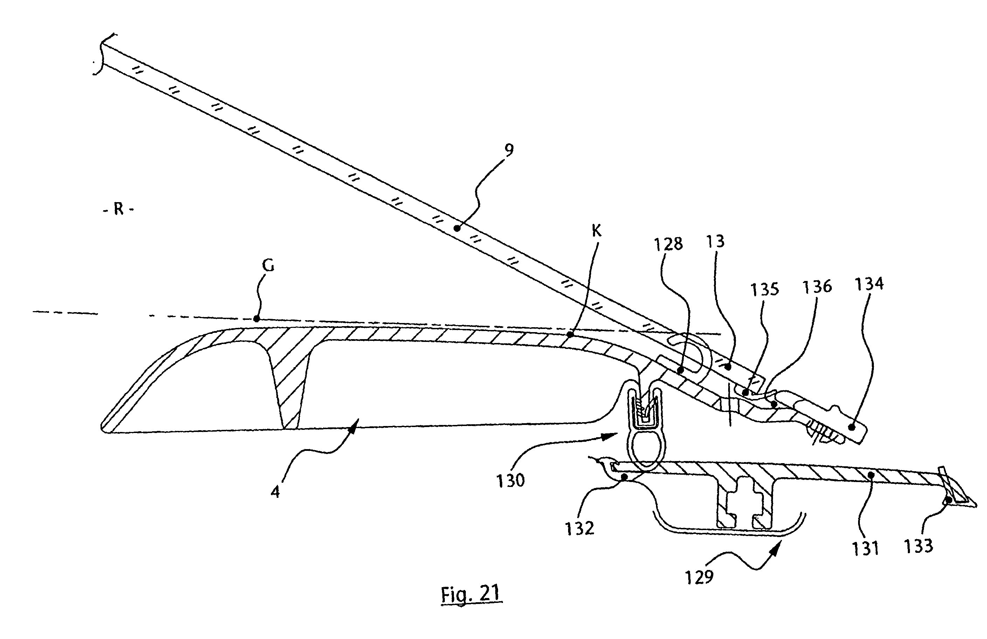

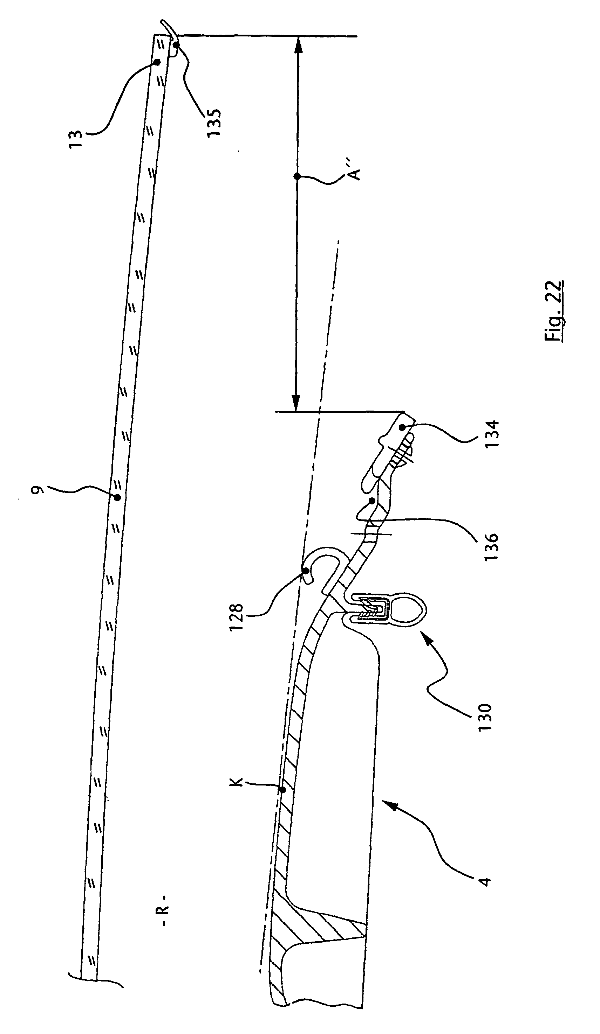

In Fig. 21 und Fig. 22 ist der Verbindungsbereich von Heckscheibe 9 und Verdeckspannbügel 4 in einer vergrößerten Ausschnittsdarstellung gemäß der Fahrzeuglängsmittelebene 2 in Fig. 1 dargestellt. Dabei wird deutlich, daß der untere Querseitenrand 13 der Heckscheibe 9 in vorteilhafter Ausführung auf einer am Verdeckspannbügel 4 vorgesehenen Dichtung 128 aufliegt (Fig. 21). Ebenso ist denkbar, daß die Heckscheibe 9 auf mehreren am Verdeckspannbügel 4 vorgesehenen Dichtungen aufliegt oder daß die Heckscheibe 9 im Bereich des Querseitenrandes 13 bis zu einem Verdeckkastendeckel 129 hin verlängert ist und hier mittels einer Dichtung eine unmittelbare Auflage und Abdichtung zum Innenraum R des Fahrzeugs 1 gebildet wird (nicht dargestellt).

Bei dem dargestellten Dichtungssystem für die aufliegende Heckscheibe 9 ist am Verdeckspannbügel 4 gegenüberliegend der Scheiben-Dichtung 128 eine auf dem Verdeckkastendeckel 129 aufliegende Karosseriedichtung 130 vorgesehen. In vorteilhafter Ausführung ist der Verdeckkastendeckel 129 im Überdeckungsbereich zum Bügel 4 mit einer als Gegenlager wirksamen Stützplatte 131 versehen, die ihrerseits jeweilige Dichtungen 132 und 133 aufweist.

Im Bereich der heckseitigen Scheibenabstützung zum Verdeckspannbügel 4 hin ist an diesem eine als unterer Randabschluß auch optisch wirksame Blende 134 abgestützt, an deren oberen Randbereich eine an der Unterseite der Heckscheibe 9 fixierte Dichtlippe 135 so anlegbar ist, daß in diesem Bereich ein Toleranzausgleich erreicht ist, die aneinandergrenzenden Teile eine optisch ansprechende Verbindungszone aufweisen und gleichzeitig eine abgedeckte Wasserleitrinne 136 gebildet ist.

Mit einer Strich-Punkt-Linie ist eine Ebene G oberhalb des Verdeckspannbügels 4 veranschaulicht, bis zu deren Bereich ein Fahrzeugbenutzer eine ungehinderte Durchsicht hat, die dadurch erreicht ist, daß die im Rahmen 15 gehaltene Heckscheibe 9 im Bereich ihres unteren Querseitenrandes 13 unmittelbar auf dem Verdeckspannbügel 4 bzw. der Dichtung 28 abgestützt ist. In Fig. 22 sind die vorbeschriebenen Bauteile in einer Abstandsstellung veranschaulicht, die im wesentlichen den Abstand A'' in der gemäß Fig. 18 gezeigten Packstellung des Verdecks 4 verdeutlicht.

## Patentansprüche

1. Cabriolet-Fahrzeug mit einem ein spiegelbildlich zur Fahrzeuglängsmittelebene (2) aufgebautes Verdeckgestell (3) mit heckseitigem Verdeckspannbügel (4) aufweisenden und bei Verlagerung um ein karosseriefestes Hauptlager (5) in einem heckseitigen Verdeckkasten (8) ablegbaren bzw. aus diesem rückführbaren Faltverdeck (7), dessen flexible Dachhaut (6) im Heckbereich eine oberhalb des Verdeckspannbügels (4) verlaufende, insbesondere formstabile Heckscheibe (9) mit im wesentlichen rechteckiger Umfangskontur aufweist, wobei die im Bereich des unteren Querseitenrandes (13) vom Verdeckspannbügel (4) lösbare Heckscheibe (9) zumindest im Bereich ihrer beiden Längsseitenränder (11, 12) einen die flexible Dachhaut (6) erfassenden Rahmen (15) aufweist, **dadurch gekennzeichnet, daß** die Heckscheibe (9) in Schließstellung mit ihrem unteren Querseitenrand (13) unmittelbar von oben auf dem Verdeckspannbügel (4) abgestützt ist und am die Heckscheibe (9) U-förmig umfassenden Rahmen (15) eine Steuerungsbaugruppe (14; 14') angelenkt ist, derart, daß der Rahmen (15) mit der Heckscheibe (9) zumindest phasenweise bei einer Verdeckbewegung vom Verdeckspannbügel (4) abhebbar und zu diesem in eine jeweilige Abstandstellung (A; A'; A' '; Winkel W) verlagerbar ist.

2. Cabriolet-Fahrzeug nach Anspruch 1, **dadurch gekennzeichnet, daß** die Heckscheibe (9) vom Verdeckspannbügel (4) abhebbar und relativ zur Schließstellung verschiebbar ist.

3. Cabriolet-Fahrzeug nach Anspruch 1 oder 2, **dadurch gekennzeichnet, daß** der untere Querseitenrand (13) der Heckscheibe (9) ausgehend von seiner lösbaren Stützstellung auf dem Verdeckspannbügel (4) relativ zu diesem nach außen verlagerbar ist.

4. Cabriolet-Fahrzeug nach einem der Ansprüche 1 bis 3, **dadurch gekennzeichnet, daß** der untere Querseitenrand (13) der Heckscheibe (9) im Bereich des Verdeckspannbügels (4) und/oder einem Verdeckkastendeckel (129) von oben auf zumindest einem Dichtungsteil (D; 128) in dem lösbaren Verbindungseingriff festlegbar ist.

5. Cabriolet-Fahrzeug nach einem der Ansprüche 1 bis 4, **dadurch gekennzeichnet, daß** die Steuerungsbaugruppe (14; 14') eine sich nahe dem Hauptlager (5) zwischen dem jeweiligen Seitenteil (17) des Rahmens (15) und dem Verdeckspannbügel (4) erstreckende Schwenkstrebe (16) aufweist und diese andererseits mit einer den Rahmen (15) mit dem Verdeckspannbügel (4) verbindenden Schubführungseinheit (18) zusammenwirkt.

6. Cabriolet-Fahrzeug nach einem der Ansprüche 1 bis 5, **dadurch gekennzeichnet, daß** die Schwenkstrebe (16) durch einen außermittig an dieser angelenkten Verbindungshebel (22) mit dem Verdeckgestell (3) und/oder dem Hauptlager (5) verbunden ist.

7. Cabriolet-Fahrzeug nach einem der Ansprüche 1 bis 6, **dadurch gekennzeichnet, daß** die Schubführungseinheit (18) einen am Seitenteil (17) des Rahmens (15) festgelegten Lenkprofilkörper (24) aufweist, an dessen bogenförmig gekrümmter Führungsschiene (25) eine schwenkbeweglich am Verdeckspannbügel (4) angelenkte Halteklaue (27) verlagerbar ist.

8. Cabriolet-Fahrzeug nach Anspruch 7, **dadurch gekennzeichnet, daß** die Halteklaue (27) an der Führungsschiene (25) eine Gleitverbindung bildet.

9. Cabriolet-Fahrzeug nach Anspruch 7 oder 8, **dadurch gekennzeichnet, daß** die von einem Lagerbock (39) auf dem Verdeckspannbügel (4) gehaltene Halteklaue (27) eine die ein T-Profil aufweisende Führungsschiene (25) untergreifende Haltenut (28) aufweist.

10. Cabriolet-Fahrzeug nach einem der Ansprüche 1 bis 9, **dadurch gekennzeichnet, daß** die Steuerungsbaugruppe (14') eine sich zwischen der vorderen Schwenkstrebe (16') und der hinteren Schubführungseinheit (18) erstreckende Spannbaugruppe (31) aufweist.

11. Cabriolet-Fahrzeug nach Anspruch 10, **dadurch gekennzeichnet, daß** die Spannbaugruppe (31) mit einer einstellbaren Druckfeder (32) und/oder einer Torsionsfeder versehen ist.

12. Cabriolet-Fahrzeug nach einem der Ansprüche 1 bis 11, **dadurch gekennzeichnet, daß** als Steuerungsbaugruppe (14) für die Heckscheibe (9) ein Parallelogrammlenker mit zwei in Gelenkpunkten (118, 119 und 120, 121) abgestützten Schwenkstreben (116, 117) vorgesehen ist, die sich zwischen dem Verdeckspannbügel (4) und dem Rahmen (15) der Heckscheibe (9) erstrecken.

13. Cabriolet-Fahrzeug nach Anspruch 12, **dadurch gekennzeichnet, daß** die zwei Schwenkstreben (116, 117) des Parallelogrammlenkers in Schließstellung im wesentlichen parallel nach vorn gerichtet sind.

14. Cabriolet-Fahrzeug nach Anspruch 12 oder 13, **dadurch gekennzeichnet, daß** die beiden Schwenkstreben (116, 117; 116') an einem jeweiligen Seitenschenkel (122; 123) des Rahmens (15) angelenkt sind.

15. Cabriolet-Fahrzeug nach einem der Ansprüche 12 bis 14 **dadurch gekennzeichnet, daß** der als Anbindung des Faltverdecks (7) vorgesehene Rahmen (15) in die Dachhaut (6) integriert ist und diese die Längsseitenteile (17) bzw. Seitenschenkel (122; 123) und den oberen Querschenkel (126) übergreift.

16. Cabriolet-Fahrzeug nach einem der Ansprüche 1 bis 15, **dadurch gekennzeichnet, daß** die jeweilige Schwenkstellung der Heckscheibe (9) im Bereich der Schwenkstrebe (16; 16'; 116, 117) und/oder der Schubführungseinheit (18) durch die Falt- oder Spannbewegung der Dachhaut (6) geführt ist.

17. Cabriolet-Fahrzeug nach einem der Ansprüche 1 bis 16, **dadurch gekennzeichnet, daß** die Heckscheibe (9) außenseitig im Bereich ihres jeweiligen Längsseitenteiles (17) bzw. der Seitenschenkel (122, 123) eine zum Verdeckspannbügel (4) hin verlaufende und als Spannungsausgleichszone in die Dachhaut (6) integrierte Verdeckstofftasche (37; 127) aufweist.

18. Cabriolet-Fahrzeug nach einem der Ansprüche 1 bis 17, **dadurch gekennzeichnet, daß** der untere Querseitenrand (13) der Heckscheibe (9) mit einer über diese vorstehenden und als Toleranzausgleich sowie Wasserrinne wirksamen Dichtlippe (125) versehen ist.

19. Cabriolet-Fahrzeug nach einem der Ansprüche 1 bis 18, **dadurch gekennzeichnet, daß** die Heckscheibe (9) im Bereich des Querseitenrandes (13) mit einer am Verdeckspannbügel (4) vorgesehenen Blende (134) zusammenwirkt.

20. Cabriolet-Fahrzeug nach einem der Ansprüche 1 bis 19, **dadurch gekennzeichnet, daß** der Verdeckspannbügel (4) in seinem unter dem Querseitenrand (13) der Heckscheibe (9) sichtbaren Bereich eine optisch ansprechende Kontur (K) aufweist.

## Claims

1. Convertible vehicle having a folding soft top (7), which folding soft top (7) has soft-top framing (3) which is constructed as a mirror image about the longitudinal centre plane (2) of the vehicle and has a tensioning bow (4) towards the rear of the vehicle, and which folding soft top (7), when displaced about a main support (5) secured to the vehicle bodywork, can be stowed in a soft-top compartment (8) at the rear of the vehicle or can be returned therefrom, the flexible roof skin (6) of which folding soft top (7) has, in the rear region, a rear window (9) of substantially rectangular peripheral outline which extends above the soft-top tensioning bbw (4) and is in particular constant in shape, the rear window (9), which is releasable from the soft-top tensioning bow (4) in the region of the bottom transverse side-edge (13), having, at least in the region of its two longitudinal side-edges (11, 12), a frame (15) which grips the flexible roof skin (6), **characterised in that** the rear window (9) is supported by its bottom transverse side-edge on the soft-top tensioning bow directly from above in the raised position, and a controlling sub-assembly (14; 14') is hinged to the U-shaped frame (15) enclosing the rear window (9) in such a way that, when there is a movement of the soft top, the frame (15) and the rear window (9) can be lifted off the soft-top tensioning bow (4) at least in phases and can be displaced relative thereto to respective spaced positions (A; A'; A"; angle W).

2. Convertible vehicle according to claim 1, **characterised in that** the rear window (9) can be lifted off the soft-top tensioning bow (4) and can be shifted relative to the raised position.

3. Convertible vehicle according to claim 1 or 2, **characterised in that**, starting from its releasable supported position on the soft-top tensioning bow (4), the bottom transverse side-edge (13) of the rear window (9) can be displaced outwards relative to said tensioning bow (4).

4. Convertible vehicle according to one of claims 1 to 3, **characterised in that**, in the region of the soft-top tensioning bow (4) and/or of a cover (129) for the soft-top compartment and in the releasable connected engagement, the bottom transverse side-edge (13) of the rear window (9) can be locked from above on at least one seal part (D; 128).

5. Convertible vehicle according to one of claims 1 to 4, **characterised in that** the controlling sub-assembly (14; 14') has a pivoting strut (16) which extends between a respective side member (17) of the frame (15) and the soft-top tensioning bow (4) in the vicinity of the main support (5) and on the other hand this pivoting strut (16) co-operates with a unit (18) for guidance in thrust which connects the frame (15) to the soft-top tensioning bow (18).

6. Convertible vehicle according to one of claims 1 to 5, **characterised in that** the pivoting strut (16) is connected to the soft-top framing (3) and/or the main support (5) by a connected lever (22) which is connected to the pivoting strut (16) at an off-centred point.

7. Convertible vehicle according to one of claims 1 to 6, **characterised in that** the unit (18) for guidance in thrust has a profiled directing body (24) having a guide rail (25) curved in an arc along which a retaining claw (27), which is hinged to the soft-top tensioning bow (4) to move with a pivoting motion, can be displaced.

8. Convertible vehicle according to claim 7, **characterised in that** the retaining claw (27) forms a sliding joint on the guide rail (25).

9. Convertible vehicle according to claim 7 or 8, **characterised in that** the retaining claw (27), which is held on the soft-top tensioning bow (4) by a mounting pedestal (39), has a retaining groove (28) which fits under the guide rail (25), which latter is T-shaped in profile.

10. Convertible vehicle according to one of claims 1 to 9, **characterised in that** the controlling sub-assembly (14') has a tensioning sub-assembly (31) which extends between the pivoting strut (16') at the front and the unit (18) for guidance in thrust at the rear.

11. Convertible vehicle according to claim 10, **characterised in that** the tensioning sub-assembly is provided with an adjustable compression spring (32) and/or a torsion spring.

12. Convertible vehicle according to one of claims 1 to 11, **characterised in that** what is provided as a controlling sub-assembly (14) for the rear window (9) is a parallelogram linkage having two pivoting struts (116, 117) which are supported at hinge points (118, 119 and 120, 121) and extend between the soft-top tensioning bow (4) and the frame (15) of the rear window (9).

13. Convertible vehicle according to claim 12, **characterised in that**, in the raised position, the two pivoting struts (116, 117) belonging to the parallelogram linkage are directed forward, substantially in parallel.

14. Convertible vehicle according to claim 12 or 13, **characterised in that** the two pivoting struts (116, 117; 116') are hinged to a given side-member (122; 123) of the frame (15).

15. Convertible vehicle according to one of claims 12 to 14, **characterised in that** the frame (15), which is intended as a means of connecting in the folding soft top (7), is incorporated into the roof skin (6), and the latter fits over the longitudinal side-pieces (17) or side-members (122; 123) and the top cross-member (126).

16. Convertible vehicle according to one of claims 1 to 15, **characterised in that** the pivoted position of the rear window (9) at any given time is guided, in the region of the pivoting strut (16, 16'; 116, 117) and/or of the unit (18) for guidance in thrust, by the folding or tensioning movement of the roof skin (6).

17. Convertible vehicle according to one of claims 1 to 16, **characterised in that** the rear window (9) has, on the outside, in the region of a respective longitudinal side-piece (17) or the side-members (122, 123), a pocket (37; 127) of soft-top material which extends towards the soft-top tensioning bow (4) and is incorporated in the roof skin (6) as a tension equalising zone.

18. Convertible vehicle according to one of claims 1 to 17, **characterised in that** the bottom transverse side-edge (13) of the rear window (9) is provided with a sealing lip (125) which projects beyond the rear window (9) and acts as a means of correcting for tolerances and as a gutter for water.

19. Convertible vehicle according to one of claims 1 to 18, **characterised in that** the rear window (9) co-operates in the region of the transverse side-edge (13) with a blanking piece (134) which is provided on the soft-top tensioning bow (4).

20. Convertible vehicle according to one of claims 1 to 19, **characterised in that** the soft-top tensioning bow (4) has, in the region thereof which is visible below the transverse side-edge (13) of the rear window (9), a visually appealing contour.

## Revendications

1. Véhicule cabriolet avec une capote pliante (7) possédant une armature de capote (3) montée de manière inversée par rapport au plan longitudinal médian du véhicule (2), avec un l'arceau tendeur de capote (4) situé à l'arrière et pouvant être emmagasinée, lors du processus de déplacement autour d'un palier principal (5) solidaire avec la carrosserie, dans un compartiment pour capote (8) situé à l'arrière et/ou pouvant être ressortie de la capote pliante (7), la toile (6) flexible de ladite capote pliante présentant dans la zone arrière une lunette arrière (9) de forme particulièrement stable s'étendant au-dessus de l'arceau tendeur de capote (4) et possédant un contour circonférentiel essentiellement rectangulaire, la lunette arrière (9) détachable de l'arceau tendeur de capote (4) dans la zone du bord latéral transversal inférieur (13) possédant au moins dans la zone de ses deux bords latéraux longitudinaux (11, 12) un cadre (15) enserrant la toile (6) flexible,
**caractérisé en ce que**
la lunette arrière (9) en position de fermeture s'appuie d'en haut avec son bord latéral transversal inférieur (13) sur l'arceau tendeur de capote (4) et un ensemble de commande (14 ; 14') est articulé sur le cadre (15) entourant en forme de U la lunette arrière (9) de telle sorte que le cadre (15) puisse être détaché, au moins par phases, de l'arceau tendeur de capote (4) lors d'un mouvement de la capote et puisse être déplacé par rapport à celui-ci selon une position espacée correspondante (A ; A' ; A" ; angle W).

2. Véhicule cabriolet selon la revendication 1,
**caractérisé en ce que**
la lunette arrière (9) peut être détachée de l'arceau tendeur de la capote (4) et est coulissante par rapport à la position de fermeture.

3. Véhicule cabriolet selon la revendication 1 ou 2,
**caractérisé en ce que**
le bord latéral transversal (13) inférieur de la lunette arrière (9) peut être déplacé vers l'extérieur sur l'arceau tendeur de capote (4) et par rapport à celui-ci à partir de sa position de soutien détachable.

4. Véhicule cabriolet selon l'une quelconque des revendications 1 à 3,
**caractérisé en ce que**
le bord latéral transversal (13) inférieur de la lunette arrière (9) peut être fixé d'en haut en prise de liaison détachable dans la zone de l'arceau tendeur de capote (4) et/ou d'un couvercle du compartiment de la capote (129) sur au moins un élément d'étanchéité (D ; 128).

5. Véhicule cabriolet selon l'une quelconque des revendications 1 à 4,
**caractérisé en ce que**
l'ensemble de commande (14 ; 14') présente une entretoise pivotante (16) s'étirant entre chaque partie latérale (17) du cadre (15) et l'arceau tendeur de capote (4) situé à proximité du palier principal (5), et ladite entretoise coopère d'un autre côté avec l'unité de guidage par poussée (18) reliant le cadre (15) à l'arceau tendeur de capote (4).

6. Véhicule cabriolet selon l'une quelconque des revendications 1 à 5,
**caractérisé en ce que**
l'entretoise pivotante (16) est reliée à l'armature de la capote (3) et/ou au palier principal (5) par un levier de liaison (22) articulé sur ladite entretoise de manière excentrique.

7. Véhicule cabriolet selon l'une quelconque des revendications 1 à 6,
**caractérisé en ce que**
l'unité de guidage par poussée (18) présente un corps de profil de direction (24) fixé sur la partie latérale (17) du cadre (15), sur les rails de guidage arqués duquel corps une pince (27) articulée par mouvement de pivotement sur l'arceau tendeur de capote (4) peut être déplacée.

8. Véhicule cabriolet selon la revendication 7,
**caractérisé en ce que**
la pince (27) forme une liaison par glissement au niveau des rails de guidage (25).

9. Véhicule cabriolet selon la revendication 7 ou 8,
**caractérisé en ce que**
la pince (27) maintenue par un support de palier (39) sur l'arceau tendeur de capote (4) présente une rainure de retenue (28) prenant par en dessous les rails de guidage (25) qui présentent un profil en T.

10. Véhicule cabriolet selon l'une quelconque des revendications 1 à 9,
**caractérisé en ce que**
l'ensemble de commande (14') présente un ensemble de tension (31) s'étendant entre l'entretoise pivotante avant (16') et l'unité de guidage par poussée (18) arrière.

11. Véhicule cabriolet selon la revendication 10,
**caractérisé en ce que**
l'ensemble de tension (31) est muni d'un ressort de pression réglable (32) et/ou d'un ressort à torsion.

12. Véhicule cabriolet selon l'une quelconque des revendications 1 à 11,
**caractérisé en ce qu'**
en tant qu'ensemble de commande (14) pour la lunette arrière (9), on prévoit une bielle en forme de parallélogramme munie de deux entretoises pivotantes (116, 117) soutenues aux points d'articulation (118, 119 et 120, 121), lesquelles entretoises s'étendent entre l'arceau tendeur de capote (4) et le cadre (15) de la lunette arrière (9).

13. Véhicule cabriolet selon la revendication 12,
**caractérisé en ce que**
en position de fermeture, les deux entretoises pivotantes (116, 117) de la bielle en forme de parallélogramme sont orientées essentiellement parallèlement vers l'avant.

14. Véhicule cabriolet selon la revendication 12 ou 13,
**caractérisé en ce que**
les deux entretoises pivotantes (116, 117 ; 116') sont articulées sur une traverse latérale respective (122 ; 123) du cadre (15).

15. Véhicule cabriolet selon l'une quelconque des revendications 12 à 14,
**caractérisé en ce que**
le cadre (15) prévu comme rattache pour la capote pliante (7) est intégré dans la toile (6) et que celle-ci prend par-dessus les parties latérales longitudinales (17) et/ou les traverses latérales (122 ; 123) et la traverse transversale supérieure (126).

16. Véhicule cabriolet selon l'une quelconque des revendications 1 à 15,
**caractérisé en ce que**
chaque position pivotante de la lunette arrière (9) est guidée dans la zone de l'entretoise pivotante (16 ; 16' ; 116, 117) et/ou de l'unité de guidage par poussée (18) par le mouvement de pliage ou de tension de la toile (6).

17. Véhicule cabriolet selon l'une quelconque des revendications 1 à 16,
**caractérisé en ce que**
la lunette arrière (9) présente à l'extérieur dans la zone de chaque partie latérale longitudinale (17) et/ou des traverses latérales (122, 123), un sac en tissu pour la capote (37 ; 127) intégré dans la toile (6) en tant que zone de compensation de tension et s'étendant en direction de l'arceau tendeur de capote (4).

18. Véhicule cabriolet selon l'une quelconque des revendications 1 à 17,
**caractérisé en ce que**
le bord latéral transversal (13) inférieur de la lunette arrière (9) est muni d'une lèvre d'étanchéité (125) faisant saillie par-dessus celle-ci et agissant comme compensation de tolérance et gouttière.

19. Véhicule cabriolet selon l'une quelconque des revendications 1 à 18,
**caractérisé en ce que**
la lunette arrière (9) coopère dans la zone du bord latéral transversal (13) avec un écran prévu sur l'arceau tendeur de capote (4).

20. Véhicule cabriolet selon l'une quelconque des revendications 1 à 19,
**caractérisé en ce que**
l'arceau tendeur de capote (4) présente dans sa zone visible sous le bord latéral transversal (13) de la lunette arrière (9) un contour agréable à l'oeil.
